# EUROPEAN PATENT SPECIFICATION

(11) **EP 1 663 770 B1**
(45) Date of publication and mention of the grant of the patent: **20.05.2009**
(21) Application number: 04703953.2
(22) Date of filing: 21.01.2004
(51) Int. Cl.: B63B 5/10, B32B 27/04, B44C 5/04

(54) **MARINE FLOORING PLATE**
SCHIFFSBODENBELAGPLATTE
DALLE DE PLANCHER MARIN

(30) Priority: 26.09.2003 NO 20034298
(43) Date of publication of application: 07.06.2006
(73) Proprietor: Combi Craft AS, 3275 Svarstad (NO)
(72) Inventor: HVAAL, Tom, Kr., N-3275 Svarstad (NO); FISCHER, Matthias, N-3181 Horten (NO); STROM, Truls, H., N-0774 Oslo (NO)
(74) Representative: Byklum, Knut Birger
(86) International application number: PCT/NO2004/000017
(87) International publication number: WO 2005/030569

(56) References cited:
- EP-A2- 0 300 156
- WO-A1-01/00948
- GB-A- 794 099
- US-A- 5 207 172

## Description

The present invention relates to a marine flooring plate designed for use as walking base in a boat, which marine flooring plate is constructed of a High Pressure Laminate (HPL) having a body, or core, of kraft paper impregnated with thermosetting binding agent, an upper layer in the form of a décor paper imprinted with wood structure and impregnated with resin and a wear resistant top layer in the form of a transparent paper impregnated with resin.

The invention also relates to a method for manufacturing a marine flooring plate of the above said kind.

At present two main choices are available for flooring in leisure boats. One is genuine flooring of natural wood, frequently made of teak and is layed out as parquet with interstices between the individual boards, so called seams, and includes a surrounding frame work in the same level as the marine flooring. The interstices are either filled with tar, as in the past, or more modem, with black polyurethane based mounting glue which is joint filler that seals the interstice against water ingress. Normally, when the tar or joint filler is drying up, the seams will appear as being slightly recessed relative to the parquet level. This creates décor and demonstrates genuine ship flooring in a nice way.

The second choice is marine flooring plates that imitate genuine woodwork like teak floor. One type of marine flooring plates supplied today is made of High Pressure Laminate (HPL) having imprinted black or light seams. The High Pressure Laminate has a body of standard kraft paper, which is brown in colour, and is impregnated with phenolic resin. On top of the body a decor paper is laying. This is a paper imprinted with teak décor and 5mm wide black/light seams spaced 50mm apart and impregnated with melamine resin. The black seams imitate teak flooring assembled with tar in the joints, primarily for outdoor use, while the light seams imitate Ramin lists between the boards, normally used indoor. On top of the décor layer is a transparent overlay paper impregnated with melamine that provides high wear resistance to the product. Further may particular engraved calenders make a structure in the surface that provides boat floorings of HPL having black/light seams with a high friction coefficient for increased antiskid safety.

A first object with the present invention is to provide new generation marine flooring plates which in greater extent resemble the marine floorings of natural wood. First of all this applies to the seams, which until now have been lying in the same plane as the flooring surface. It is desirable to design the seams so that they appear recessed, or as a shallow cavetto, which far more clearly imitate a natural seam. Thus the visual impression of the marine flooring plate will become closer to the genuine product.

A second object with the present invention is to be able to manufacture marine flooring plates that also include an imitated surrounding framework. This will considerably improve the visual total impression of the marine flooring plate and still more approach the genuine product.

Moreover has it been an object with the present invention to provide a marine flooring plate with the new design without the need to increase the retail price substantially.

According to the present invention is a marine flooring plate of the introductory said kind provided which is distinguished in that the body of the high pressure laminate has a through inked black or brown core, that the wear resistant top layer and the upper layer having the wood structure décor is machined in the depth and down into the black/brown core of the high pressure laminate by means of a milling tool to form seams in the marine flooring plate in a predetermined pattern in order to imitate a marine flooring of natural wood having seams.

Preferably the high pressure laminate consists of approximately 60% paper and approximately 40% thermosetting binding agent.

Suitably the core of the high pressure laminate is impregnated with phenolic resin. The décor paper and the top layer are suitably impregnated with melamine resin.

The machining depth to form the seams will normally be in the order of magnitude 0,1 to 1,0mm, and the machining width to form the seams will be in order of 3 to 10mm, most customary approximately 5mm.

According to the present invention a method of the introductory said kind is provided, which method is distinguished in that the wear resistant top layer and the upper layer having wood structure décor are depth machined and down into the black/brown core of the high pressure laminate by means of a milling tool to form seams in the marine flooring plate in a predetermined pattern to imitate a marine floor of natural wood having seams.

Suitably the milling tool is connected to a numeric controlled machine tool (CNC) having an option for programming of actual marine flooring plate patterns.

Usually a standard high pressure laminate plate is initially fixed on stable jigs by means of vacuum and is positioned relative to the milling tool and seams are milled in the plate to depths in order of magnitude 0,1 to 1,0mm.

In a preferable embodiment the milling tool is arranged to take into account variations in thickness and curving, due to stress variations, in the plate by means of proximity sensors.

Other and further objects, features and advantages will appear from the following description of two for the time being preferred embodiments of the invention, which is given for the purpose of description, without thereby being limiting, and given in context with the appended drawings where:
Fig. 1A shows from above a leisure boat having marine flooring plates according to the present invention installed,
Fig. 1B shows the marine flooring plates of fig. 1A in the form of a separate kit in which each flooring plate has individual appearance adapted to the configuration of the boat,
Fig. 2A shows one individual marine flooring plate in enlarged scale,
Fig. 2B shows a cross sectional view along line A-A in fig. 2A,
Fig. 2C shows an enlarged view of the encircled part of fig. 2B,
Fig. 3 shows a cross sectional view through a high pressure laminate to illustrate the layered construction of such a laminate, and
Fig. 4 shows a kit of marine flooring plates according to the prior art.

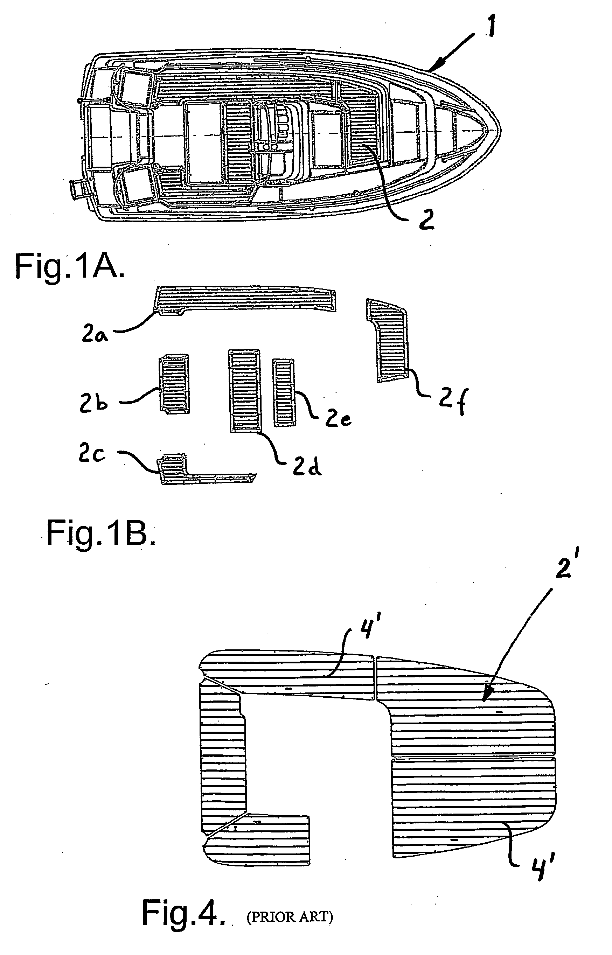

Reference is firstly made to figure 1A showing from above a leisure boat 1. The boat 1 has a floor, or a walking course, which is made up by a number of marine flooring plates 2.

As it appears from figure 1B the boat flooring consists of a kit of marine flooring plates 2a-2f each having its individual configuration that is adapted to the internal contours of the boat 1.

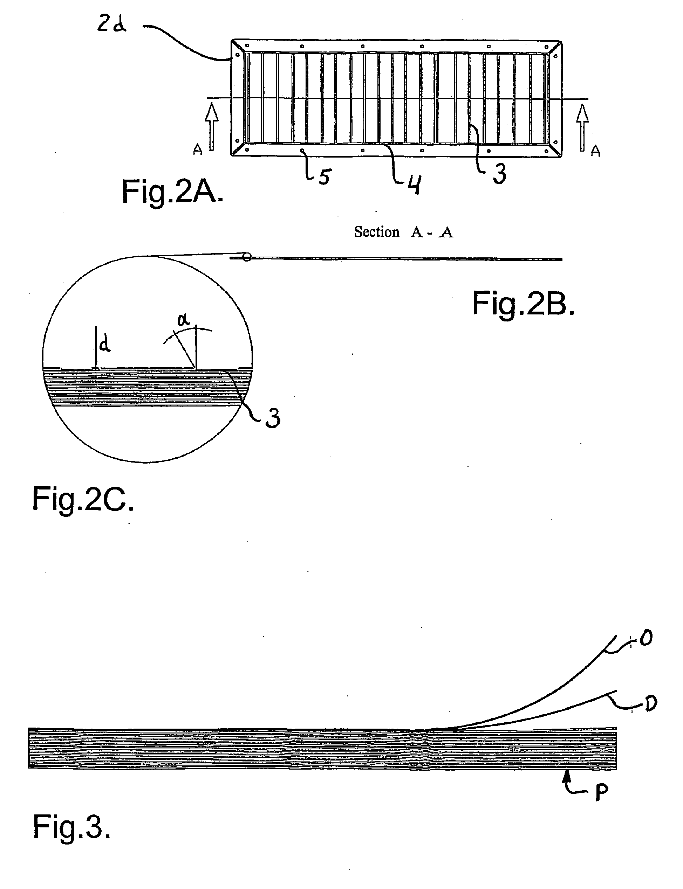

Figure 2A illustrates a marine flooring plate 2d of the kit shown in figure 1B. The marine flooring plate has a number of transversally extending seams 4. The seams 4 run parallel to the outer contour of the marine flooring plate 2d and together they imitate a framework around the marine flooring plate 2d. The framework often imitates 50mm wide boards that surround the flooring plate. In addition a number of apertures 5 are illustrated that can be used for fixing the marine flooring plate 2d to the hull of the boat by means of screws. The apertures, however, may be omitted if the marine flooring plates 2a-2f are intended to be fixed to a boat hull by means of gluing or else. It is to be understood that the complete pattern of the seams 3, 4 is lying in level, as figure 2B suggests.

As mentioned, Fig. 2C shows an enlarged view of the encircled part of fig. 2B and illustrates that the seams 3, 4 are recessed a depth d relative to the plane of the marine flooring plate. Typical depth will be in the range of 0,1 to 1,0mm, normally about 0,2mm. Typical width will be in the range of 3 to 10mm, normally about 5mm. In addition the edge of the seams 3, 4 can be inclined by an angle α relative to a vertical line. Typically the angle α will be in the range of 10° to 40° , normally about 30°. In addition the marine flooring can with advantage be grinded on the rear side.

Fig. 3 shows a cross sectional view through a high pressure laminate (HLP) that illustrates the layered construction of such a laminate. One layer adds typically approximately 0,2mm. A high pressure laminate plate of 5mm will consist of a body, or core, of approximately 25 layers of kraft paper P (about 60%) impregnated with thermosetting binding agent (about 40%). By supplying heat of about 120°C and pressure of 7 MPa the binding agent and the hardening agent fuse in an irreversible chemical reaction out to a homogeneous, nonporous material having a density of approximately 1,4 g/cm3. The body has a through colored black or brown core.

A décor paper D with about the same thickness as above is lying on top of the kraft paper P. The décor paper D has an imitated wooden structure imprinted in the top surface thereof and is impregnated with melamine resin. On top of the décor paper D is a layer of transparent paper O impregnated with melamine which provides the laminate with a high wear resistance. Special engraved calenders make a structure in the surface that offers the marine flooring a high friction coefficient for suitable properties regarding antiskid safety.

Fig. 4 shows a kit of marine flooring plates 2' according to the prior art as it is discussed in the ingress of the specification. The seams 4' are in the form of impressed, parallel stripes in the plane and the framework is totally absent.

A method for production of a marine flooring plate 2 designed for use as walking base in a boat 1 will now be described. A plate of high pressure laminate (HPL) having standard dimensions is fixed by means of vacuum on stable jigs arranged in a factory. The base material to the jigs is as an example a 30mm furniture plate (laminated plate), which is calibrated in thickness and milled on a NC operated top mill. According to desires/drawings are pieces of the plate milled out. The edges of the pieces are rounded off by a radius of 1mm. By means of a spring-loaded key apparatus that senses possible thickness tolerances and curvatures in the HPL plates, 0,1 to 1,0mm deep and about 5,0mm wide grooves are milled through the décor layer so that the black (brown) color in the core paper appears. To mill the grooves, a special manufactured tool having diamond blade with a flank angle of 30° is used. This way of production makes it possible to precisely mill out the particular seam pattern the customer may desire.

## Claims

1. A marine flooring plate designed for use as walking base in a boat, which marine flooring plate is constructed of a High Pressure Laminate HPL having a body of kraft paper (P) impregnated with thermosetting binding agent, an upper layer in the form of a décor paper (D) imprinted with wood structure and impregnated with resin and a wear resistant top layer in the form of a transparent paper (O) impregnated with resin, **characterized in that** the body of the high pressure laminate has a through inked black or brown core, that the wear resistant top layer and the upper layer having wood structure décor is machined in the depth (d) and into the black/brown core of the high pressure laminate by means of a milling tool to form seams (3, 4) in the marine flooring plate in a predetermined pattern to imitate a marine flooring of natural wood having seams.

2. The marine flooring plate according to claim 1, **characterized in that** the high pressure laminate consists of approximately 60% paper and approximately 40% thermosetting binding agent.

3. The marine flooring plate according to claim 1 or claim 2, **characterized in that** the core of the high pressure laminate is impregnated with phenolic resin.

4. The marine flooring plate according to claim 1, 2 or 3, **characterized in that** the décor paper (D) is impregnated with melamine resin.

5. The marine flooring plate according to any of the claims 1-4, **characterized in that** the top layer (O) is impregnated with melamine resin.

6. The marine flooring plate according to any of the claims 1-5, **characterized in that** the machining depth (d) to form the seams (3, 4) is in order of magnitude 0,1 to 1,0mm.

7. The marine flooring plate according to any of the claims 1-6, **characterized in that** the machining width to form the seams (3, 4) is in order of magnitude 3 to 10mm.

8. A method for manufacture of a marine flooring plate designed for use as walking base in a boat, which marine flooring plate is constructed of a High Pressure Laminate HPL having a body of kraft paper impregnated with thermosetting binding agent, an upper layer in the form of a décor paper imprinted with wood structure and impregnated with melamine resin and a wear resistant top layer in the form of a transparent paper impregnated with melamine, said body of the high pressure laminate has a through inked black or brown core, **characterized in that** the wear resistant top layer and the upper layer having wood structure décor are depth machined and down into the black/brown core of the high pressure laminate by means of a milling tool to form seams in the marine flooring plate in a predetermined pattern to imitate a marine floor of natural wood having seams.

9. A method according to claim 8, **characterized in that** the milling tool is connected to a numeric controlled machine tool, or CNC, having an option for programming of actual patterns of marine flooring plates.

10. A method according to claim 8 or 9, **characterized in that** a standard high pressure laminate plate initially is fixed on stable jigs by means of vacuum and is positioned relative to the milling tool and seams are milled in the plate to depths in order of magnitude 0,1 to 1,0mm.

11. A method according to any of the claims 8-10, **characterized in that** the milling tool is arranged to take into account variations in thickness and curving of the plate by means of proximity sensors.

## Patentansprüche

1. Eine Schiffsbodenbelagsplatte zur Verwendung als Lauffläche bei einem Boot, wobei die Schiffsbodenbelagsplatte aus Hochdruck-Laminat HPL konstruiert ist, welches einen mit einem heißhärtenden Bindemittel imprägnierten Grundkörper aus Kraftpapier (P) hat, eine obere Schicht aus Dekorpapier (D), das mit einer Holzstruktur bedruckt und mit einem Harz imprägniert ist, und eine abnutzungsbeständige, mit einem Harz imprägnierte Deckschicht aus einem transparenten Papier (O),
**dadurch gekennzeichnet,**
**dass** der Grundkörper aus Hochdruck-Laminat einen durchfärbten schwarzen oder braunen Kern aufweist,
**dass** die abnutzungsbeständige Deckschicht und die obere Schicht mit dem Holzstrukturdekor in die Tiefe (d) und in den schwarzen/brauen Kern des Hochdruck-Laminats hinein mittels einer Fräse bearbeitet werden um Fugen (3, 4) in einem vorbestimmten Muster in der Schiffsbodenbelagplatte auszubilden, um einen Schiffsbodenbelag aus natürlichem Holz mit Fugen nachzuahmen.

2. Die Schiffsbodenbelagplatte gemäß Anspruch 1, **dadurch gekennzeichnet, dass** das Hochdruck-Laminat aus ungefähr 60 % Papier und ungefähr 40 % heißhärtendem Bindemittel besteht.

3. Die Schiffsbodenbelagplatte gemäß Anspruch 1 oder Anspruch 2, **dadurch gekennzeichnet, dass** der Kern des Hochdruck-Laminats mit phenolischem Harz imprägniert ist.

4. Die Schiffsbodenbelagplatte gemäß Anspruch 1, 2 oder 3, **dadurch gekennzeichnet, dass** das Dekorpapier (D) mit Melaminharz imprägniert ist.

5. Die Schiffsbodenbelagplatte gemäß einem der Ansprüche 1-4, **dadurch gekennzeichnet, dass** die Deckschicht (O) mit Melaminharz imprägniert ist.

6. Die Schiffsbodenbelagplatte gemäß einem der Ansprüche 1-5, **dadurch gekennzeichnet, dass** die Frästiefe (d) zur Bildung der Fugen (3, 4) in der Größenordnung von 0,1 bis 1,0mm liegt.

7. Die Schiffsbodenbelagplatte gemäß einem der Ansprüche 1-6, **dadurch gekennzeichnet, dass** die Fräsbreite zur Bildung der Fugen (3, 4) in der Größenordnung von 3 bis 10 mm liegt.

8. Ein Verfahren zur Herstellung einer Schiffsbodenbelagsplatte zur Verwendung als Lauffläche bei einem Boot, wobei die Schiffsbodenbelagsplatte aus Hochdruck-Laminat HPL konstruiert ist, welches einen mit einem heißhärtenden Bindemittel imprägnierten Grundkörper aus Kraftpapier (P) hat, eine obere Schicht aus Dekorpapier (D), das mit einer Holzstruktur bedruckt und mit einem Melaminharz imprägniert ist, und eine abnutzungsbeständige, mit Melamin imprägnierte Deckschicht aus einem transparenten Papier (O), und der Grundkörper des Hochdruck-Laminats einen durchfärbten schwarzen/braunen Kern hat,
**dadurch gekennzeichnet, dass**
dass die abnutzungsbeständige Deckschicht und die obere Schicht mit dem Holzstrukturdekor in die Tiefe und hinab bis in den schwarzen/brauen Kern des Hochdruck-Laminats hinein mittels einer Fräse bearbeitet werden um Fugen in einem vorbestimmten Muster in der Schiffsbodenbelagplatte auszubilden, um einen Schiffsbodenbelag aus natürlichem Holz mit Fugen nachzuahmen.

9. Ein Verfahren gemäß Anspruch 8, **dadurch gekennzeichnet, dass** das Fräswerkzeug mit einer numerisch gesteuerten Werkzeugmaschine, oder CNC, verbunden ist, welche eine Programmiermöglichkeit für Muster von Schiffsbodenbelagsplatten aufweist.

10. Ein Verfahren gemäß Anspruch 8 oder 9, **dadurch gekennzeichnet, dass** eine übliche Hochdruck-Laminatplatte zunächst mittels Vakuum auf einer stabilen Aufspannvorrichtung fixiert und relativ zu einem Fräswerkzeug positioniert wird und Fugen bis zu einer Tiefe in der Größenordnung von 0,1 bis 1,0mm in die Platte gefräst werden.

11. Ein Verfahren gemäß einem der Ansprüche 8-10, **dadurch gekennzeichnet, dass** das Fräswerkzeug eingerichtet ist, um Schwankungen in der Dicke und eine Krümmung der Platte mittels Entfernungssensoren zu berücksichtigen.

## Revendications

1. Dalle de plancher marin conçue pour être utilisée en tant que base permettant de marcher dans un bateau, laquelle dalle de plancher marin est constituée d'un stratifié haute pression HPL présentant un corps en papier Kraft (P) imprégné d'un agent liant thermodurcissable, une couche supérieure sous la forme d'un papier décoratif (D) marqué avec une structure en bois et imprégné de résine, ainsi qu'une couche supérieure résistante à l'usure sous la forme d'un papier transparent (O) imprégné de résine, **caractérisée en ce que** le corps du stratifié haute pression a une âme noire ou brune complètement encrée, **en ce que** la couche supérieure résistante à l'usure et la couche supérieure ayant un décor de structure en bois sont usinées dans la profondeur (d) et dans l'âme noire/brune du stratifié haute pression par l'intermédiaire d'un outil de fraisage pour former des joints (3, 4) dans la balle de plancher marin selon un motif prédéterminé pour imiter un plancher marin d'un bois naturel ayant des joints.

2. Dalle de plancher marin selon la revendication 1, **caractérisée en ce que** le stratifié haute pression est constitué d'approximativement 60 % de papier et approximativement 40 % d'agent liant thermodurcissable.

3. Dalle de plancher marin selon la revendication 1 ou 2, **caractérisée en ce que** l'âme du stratifié haute pression est imprégnée de résine phénolique.

4. Dalle de plancher marin selon la revendication 1, 2 ou 3, **caractérisée en ce que** le papier décoratif (D) est imprégné de résine de mélamine.

5. Dalle de plancher marin selon l'une quelconque des revendications 1 à 4, **caractérisée en ce que** la couche supérieure (O) est imprégnée de résine de mélamine.

6. Dalle de plancher marin selon l'une quelconque des revendications 1 à 5, **caractérisée en ce que** la profondeur d'usinage (d) pour former les joints (3, 4) est d'un ordre de grandeur de 0,1 à 1 mm.

7. Dalle de plancher marin selon l'une quelconque des revendications 1 à 6, **caractérisée en ce que** la largeur d'usinage pour former les joints (3, 4) est d'un ordre de grandeur de 3 à 10 mm.

8. Procédé de fabrication d'une dalle de plancher marin conçue pour être utilisée en tant que base permettant de marcher dans un bateau, laquelle dalle de plancher marin est constituée d'un stratifié haute pression HPL ayant un corps de papier Kraft imprégné d'un agent liant thermodurcissable, d'une couche supérieure sous la forme d'un papier décoratif marqué avec une structure en bois et imprégné d'une résine de mélamine, et une couche supérieure résistante à l'usure sous la forme d'un papier transparent imprégné de mélamine, ledit corps de stratifié haute pression ayant une âme noire ou brune complètement encrée, **caractérisé en ce que** la couche supérieure résistante à l'usure et la couche supérieure ayant un décor de structure en bois sont usinées en profondeur et vers le bas dans l'âme noire/brune du stratifié haute pression par l'intermédiaire d'un outil de fraisage pour former des joints dans la dalle de plancher marin selon un motif prédéterminé pour imiter un plancher marin d'un bois naturel ayant des joints.

9. Procédé selon la revendication 8, **caractérisé en ce que** l'outil de fraisage est relié à une machine-outil à commande numérique, ou CNC, ayant une option pour programmer des motifs réels de dalles de plancher marin.

10. Procédé selon la revendication 8 ou 9, **caractérisé en ce qu'**une plaque de stratifié haute pression standard est fixée initialement sur des gabarits stables par l'intermédiaire d'un vide, et est positionnée par rapport à l'outil de fraisage, et des joints sont fraisés dans la plaque à des profondeurs d'un ordre de grandeur de 0,1 à 1 mm.

11. Procédé selon l'une quelconque des revendications 8 à 10, **caractérisé en ce que** l'outil de fraisage est agencé pour prendre en compte des variations de l'épaisseur et une incurvation de la plaque par l'intermédiaire de capteurs de proximité.
